# FASCICULE DE BREVET EUROPEEN

(11) **EP 3 329 569 B1**
(45) Date de publication et mention de la délivrance du brevet: **02.09.2020**
(21) Numéro de dépôt: 16750974.4
(22) Date de dépôt: 18.07.2016
(51) Int. Cl.: H01R 13/74, H01R 24/78, H02G 3/18, H01R 25/00, H01R 103/00

(54) **ENSEMBLE D'APPAREILLAGES ÉLECTRIQUES**
BAUSATZ FÜR ELEKTROGERÄTE
ASSEMBLY FOR ELECTRICAL EQUIPMENTS

(30) Priorité: 28.07.2015 FR 1557172
(43) Date de publication de la demande: 06.06.2018
(73) Titulaire: Legrand France, 87000 Limoges (FR); Legrand SNC, 87000 Limoges (FR)
(72) Inventeur: MAZIERE, Laurent, 87220 Feytiat (FR); CAILLE, Jean-Loup, 87520 Veyrac (FR); LONGEVILLE, Jérome, 87350 Panazol (FR); CHAUMENY, Jean-Luc, 87590 Saint Just Le Martel (FR)
(74) Mandataire: Jacobacci Coralis Harle
(86) Numéro de dépôt international: PCT/FR2016/051841
(87) Numéro de publication internationale: WO 2017/017339

(56) Documents cités:
- WO-A2-2012/032527
- DE-A1- 10 121 231
- DE-A1-102012 107 623

## Description

### DOMAINE TECHNIQUE AUQUEL SE RAPPORTE L'INVENTION

La présente invention concerne de manière générale le domaine des appareillages électriques à encastrer dans des cavités pratiquées dans des parois. Elle concerne plus particulièrement l'installation d'au moins deux modules d'appareillages électriques dans une paroi murale.

L'invention porte ainsi sur un ensemble d'appareillages électriques à rapporter dans une paroi murale, comportant :
- deux modules distincts qui comprennent chacun :
   - un socle fermé à l'avant par une paroi frontale,
   - au moins deux jeux de contacts électriques accessibles au travers du socle via deux jeux d'ouvertures d'introduction qui sont respectivement réparties de part et d'autre de deux directions moyennes parallèles à ladite paroi frontale,
      un premier des socles étant équipé de moyens de fixation dans une boîte électrique, et
      un second des socles étant équipé de moyens de fixation dans une cavité pratiquée dans la paroi murale,
- une barrette de connexion comportant des conducteurs électriques adaptés à connecter les contacts électriques d'un jeu de contacts électriques de l'un des socles avec les contacts d'un jeu de contacts électriques de l'autre socle.

L'invention trouve une application particulièrement avantageuse dans la réalisation d'un ensemble d'appareillages dans lequel les modules présentent par exemple des fonctions d'interrupteur, de va-et-vient, de variateur électrique, de prise de courant, de prise USB, de voyant, de thermostat, ou encore de détecteur (de fumée, d'inondation, de température, de mouvement ou de lumière).

### ARRIERE-PLAN TECHNOLOGIQUE

Généralement, pour installer deux modules d'appareillages électriques en position côte-à-côte dans une cloison creuse, on pratique une ouverture oblongue dans la cloison, on y rapporte une boîte multipostes, puis on engage successivement dans cette boîte les deux modules d'appareillages électriques.

Pour percer l'ouverture oblongue dans la cloison creuse, on réalise généralement deux ouvertures circulaires à la scie cloche, puis on utilise une scie à guichet pour dégager l'espace situé entre les deux ouvertures circulaires de manière à obtenir l'ouverture oblongue.

La fixation de la boîte dans l'ouverture oblongue se fait ensuite par vis. On utilise également des vis pour bloquer chaque module d'appareillage dans la boîte.

On comprend donc que cette installation est longue et fastidieuse à mettre en œuvre.

Dans le cas où un module d'appareillage est déjà installé dans la cloison, au moyen d'une boîte électrique ronde, l'installation d'un second module d'appareillage à côté de ce premier module s'avère encore plus difficile.

Dans ce cas, il est en effet nécessaire de retirer le premier module d'appareillage, de le dé-câbler, de retirer la boîte électrique hors de la cloison, d'élargir l'ouverture pratiquée dans la cloison, d'installer une nouvelle boîte oblongue, de re-câbler les deux modules puis de les installer dans la nouvelle boîte.

Le document DE10121231 divulgue quant à lui une solution pour installer des modules d'appareillages électriques en position juxtaposée sur une paroi pleine.

Dans ce document, un premier des modules d'appareillage s'installe classiquement dans la paroi, c'est-à-dire dans une boîte électrique encastrée dans une cavité pratiquée dans la paroi. Les second et troisième modules d'appareillage sont quant à eux directement fixés sur la paroi, par vissage. Des barrettes de connexion équipées de broches sont alors utilisées pour brancher les modules d'appareillage en parallèle les uns des autres.

L'inconvénient de cette solution est que l'opération de vissage des second et troisième modules d'appareillage s'avère difficile à mettre en œuvre lorsqu'il s'agit d'assurer un parfait centrage des modules les uns par rapport aux autres, selon un axe parfaitement horizontal.

Un autre inconvénient est que, puisqu'ils ne sont pas engagés dans la paroi, les second et troisième modules forment nécessairement de fortes surépaisseurs par rapport à la paroi, ce qui s'avère inesthétique. En outre, cette surépaisseur est d'autant plus importante que les modules doivent pouvoir accueillir les broches des barrettes de connexion qui sont orientées vers l'avant (ils doivent donc présenter une épaisseur supérieure à la longueur des broches).

Un troisième inconvénient est que, dans le cas où l'on souhaite ajouter un module d'appareillage à des modules déjà installés sur la paroi, il est nécessaire de retirer l'un de ces modules de manière à pouvoir y connecter une nouvelle barrette de connexion.

Un quatrième inconvénient est que cette solution ne peut pas être employée sur des cloisons creuses.

Enfin et surtout, ces modules ne peuvent être placés que dans une position : à côté l'un de l'autre suivant une ligne horizontale.

Il n'est en effet pas possible de les placer l'un au-dessus de l'autre suivant une ligne verticale, sauf à orienter les modules à 90 degrés par rapport à leur position normale, ce qui est contraire à l'usage (un interrupteur est généralement installé pour basculer de bas en haut et non de droite à gauche). WO 2012/032527 divulgue un module électrique expansible par des contacts disposés selon deux directions orthogonales autour du socle.

### OBJET DE L'INVENTION

La présente invention propose alors de permettre et simplifier l'installation dans une paroi de deux appareillages électriques l'un au-dessus de l'autre suivant une ligne verticale ou l'un à côté de l'autre suivant une ligne horizontale.

Plus particulièrement, on propose selon l'invention un ensemble tel que défini dans la revendication 1.

Grâce à l'invention, il est possible de connecter les deux modules entre eux suivant l'une ou l'autre de deux directions orthogonales, sans modifier l'orientation des modules l'un par rapport à l'autre.

Il suffit pour cela de connecter la barrette de connexion aux premiers jeux de contacts électriques de chaque module pour réaliser la connexion suivant une première direction, ou aux seconds jeux de contacts électriques de chaque module pour réaliser la connexion suivant une seconde direction orthogonale à la première.

La juxtaposition des deux modules de l'ensemble conforme à l'invention peut ainsi être réalisée aisément horizontalement ou verticalement sans modification de l'orientation d'un module par rapport à l'autre.

Selon l'invention, les moyens de fixation du second socle comportent un épaulement adapté à s'appuyer contre la face avant de la paroi murale et des moyens d'accrochage rétractables adaptés à s'accrocher à la face arrière de la paroi murale.

La solution selon l'invention ne nécessite donc pas de dégager une ouverture oblongue dans la paroi murale. Le perçage à la scie cloche de deux ouvertures circulaires suffit (ou d'une ouverture circulaire supplémentaire dans le cas de l'ajout d'un nouveau module à côté d'un module déjà existant).

Une boîte engagée dans l'une des ouvertures circulaires permet alors d'accueillir le premier socle tandis que le second socle est directement engagé au travers de l'autre des ouvertures circulaires. De ce fait, l'ensemble ne fait que peu saillie à l'avant de la paroi murale.

Par ailleurs, grâce à l'invention, le nombre d'outils et le temps nécessaires pour l'installation de l'ensemble sont réduits.

Enfin, en pratiquant une ouverture de diamètre supérieur à celui du socle du second module et en réglant la position angulaire du premier socle dans la boîte électrique, il devient possible d'ajuster l'horizontalité de l'ensemble.

D'autres caractéristiques avantageuses et non limitatives de l'ensemble conforme à l'invention sont les suivantes :
- chaque jeu d'ouvertures d'introduction est situé dans la paroi frontale du socle ;
- chaque module comporte au moins un troisième jeu de contacts électriques accessibles au travers du socle via un troisième jeu d'ouvertures d'introduction qui sont réparties de part et d'autre d'une troisième direction moyenne confondue avec l'une desdites directions moyennes ;
- chaque socle présentant un axe central, chaque module comporte exactement quatre jeux de contacts électriques accessibles au travers du socle via quatre jeux d'ouvertures d'introduction réparties dans quatre quadrants autour dudit axe central ;
- la barrette de connexion comporte un socle en matière isolante, qui loge lesdits conducteurs électriques de telle sorte que lesdits conducteurs électriques émergent sur une même face dudit socle, suivant une même direction ;
- chaque conducteur électrique comporte une partie interne qui est entièrement logée dans le socle et qui est allongée selon un axe longitudinal, et deux parties d'extrémité repliées à angle droit par rapport à ladite partie interne ;
- les moyens de fixation du premier socle comportent des moyens de réglage de la position angulaire du premier socle dans la boîte électrique ;
- chaque jeu de contacts électriques comporte trois contacts électriques isolés électriquement les uns des autres ;
- chaque contact électrique de l'un des jeux de contacts électriques est connecté électriquement à l'un des contacts électriques de chaque autre jeu de contacts électriques ;
- il est prévu une plaque d'habillage adaptée à recouvrir simultanément les ouvertures d'introduction des socles des deux modules et la barrette de connexion de liaison ;
- la plaque d'habillage comporte des moyens d'encliquetage adaptés à s'accrocher à chacun des deux modules ; et
- l'un au moins des deux modules présente une fonction de prise de courant.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un ensemble d'appareillages électriques conforme à l'invention ;
- la figure 2 est une vue de face des deux modules de l'ensemble de la figure 1, en position juxtaposée horizontalement ;
- la figure 3 est une vue en perspective arrière de l'un des deux modules de l'ensemble de la figure 1 ;
- la figure 4 est une vue schématique en perspective de la barrette de connexion de l'ensemble de la figure 1 ;
- la figure 5 est une vue schématique en perspective éclatée de la barrette de connexion de la figure 4 ;
- la figure 6 est une vue schématique en perspective éclatée d'une partie arrière du socle et des contacts électriques de l'un des modules de l'ensemble de la figure 1 ;
- la figure 7 est une vue schématique en perspective des contacts électriques des modules de l'ensemble de la figure 1 et des conducteurs électriques de la barrette de connexion de l'ensemble de la figure 1 ; et
- les figures 8 à 11 sont des vues illustrant les étapes d'installation de l'ensemble de la figure 1 sur une paroi murale ;
- la figure 12 est une vue schématique en perspective des deux modules de l'ensemble de la figure 1, en position juxtaposée verticalement ;
- la figure 13 est une vue en coupe de l'un des moyens de fixation de l'un des modules de l'ensemble de la figure 1, représenté en position d'attente ; et
- la figure 14 est une vue en coupe du moyens de fixation de la figure 13, représenté en position de fixation.

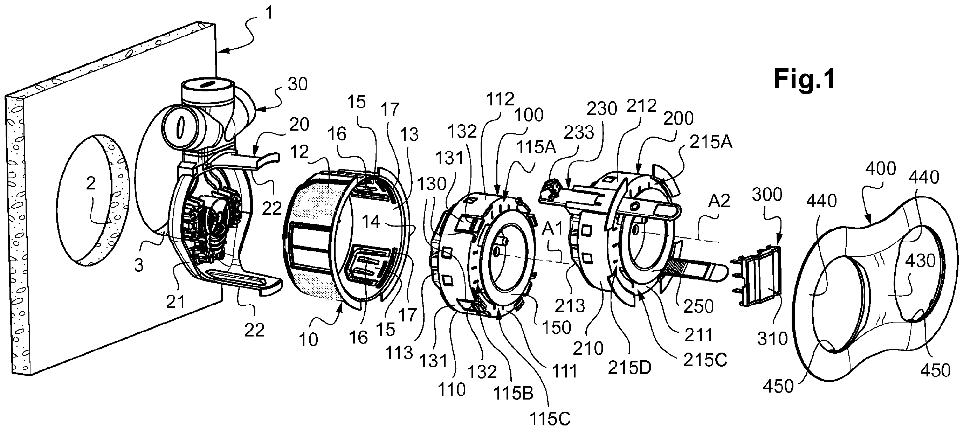

Sur les figures 1 à 11, on a représenté un mode de réalisation d'un ensemble d'appareillages électriques à rapporter sur une paroi murale.

De manière préférentielle, cette paroi murale est formée par une cloison creuse.

On rappelle à ce sujet que, de manière connue, une telle cloison creuse est généralement composée d'une ossature métallique (formée de montants verticaux et de rails horizontaux non représentés) et de panneaux de plâtre rapportés sur l'une au moins des deux faces de l'ossature métallique.

En variante, il pourrait s'agir d'une cloison creuse maçonnée (formée par exemple de briques creuses) ou d'une cloison pleine.

Dans la description, les termes « avant » et « arrière » seront utilisés par rapport à la direction du regard de l'installateur de l'ensemble d'appareillages électriques dans le panneau de plâtre. Ainsi, les termes avant et arrière désigneront respectivement le lieu tourné vers l'extérieur de la cloison creuse et le lieu tourné vers l'intérieur de cette cloison creuse.

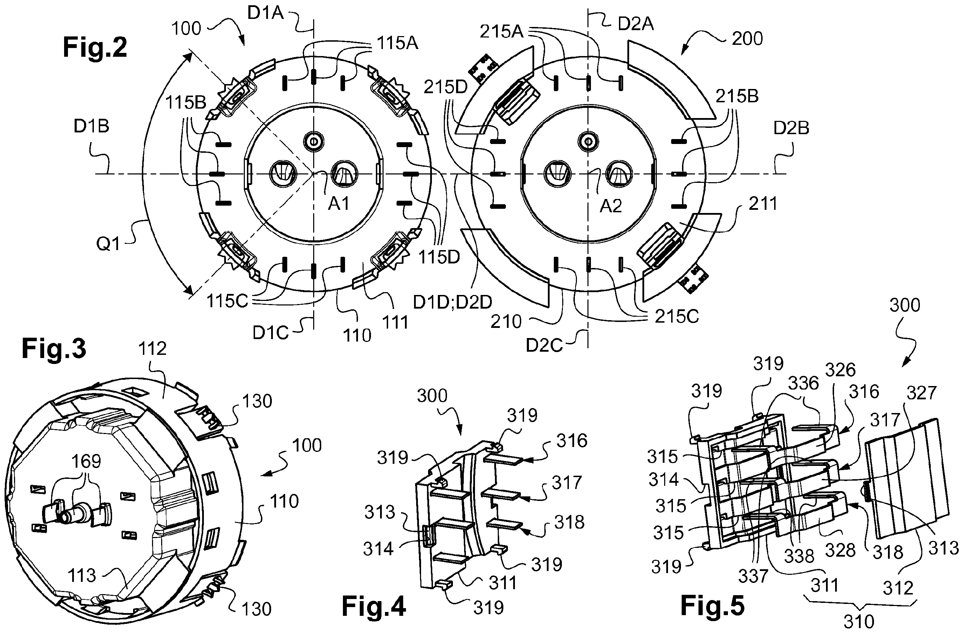

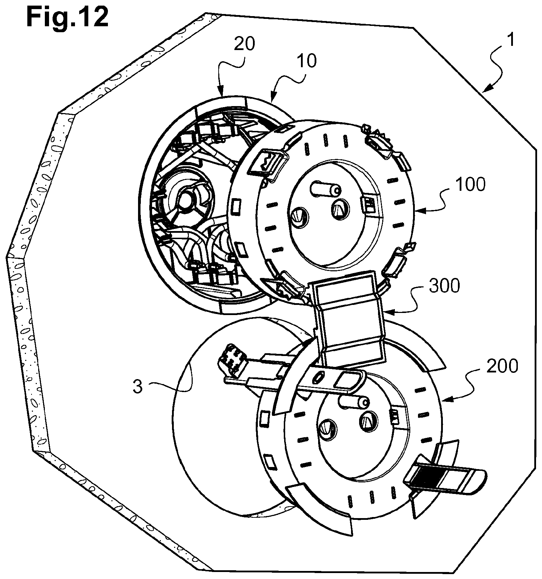

L'ensemble d'appareillages électriques représenté sur la figure 1 comporte deux modules 100, 200 à encastrer dans la cloison creuse 1 en position juxtaposée l'un à côté de l'autre (figure 2) ou l'un au-dessus de l'autre (figure 12), de manière simple et sans outil (seule une scie cloche est nécessaire pour pratiquer au préalable deux ouvertures circulaires 2, 3 dans le panneau de plâtre).

Chacun de ces deux modules 100, 200 comporte un socle 110, 210 en matière isolante. Chaque socle 110, 210 comporte une paroi latérale 112, 212 centrée autour d'un axe central A1, A2, qui est fermée à l'avant par une paroi frontale 111, 211 et qui est également fermée à l'arrière.

Chaque socle 110, 210 loge intérieurement des bornes électriques et porte à l'avant un enjoliveur 150, 250. Les formes des bornes et des enjoliveurs 150, 250 dépendent de la fonction électrique du module 100, 200 (prise de courant, interrupteur, prise USB, ...).

Pour permettre un montage simple des modules 100, 200 dans la cloison creuse, le socle 110 du premier module 100 est équipé de moyens de fixation 130 adaptés à s'accrocher dans une boîte électrique 10, tandis que le socle 210 du second module est équipé de moyens de fixation 230 adaptés à s'accrocher directement à la cloison creuse 1.

Dans le mode de réalisation représenté sur les figures, on utilisera une boîte électrique 10 particulière, qui sera décrite en détail dans la suite de cet exposé et qui présente l'avantage de pouvoir être installée dans la cloison creuse sans outil et de pouvoir recevoir le premier module 100 sans outil.

Un réseau électrique local permet d'amener directement le courant électrique aux bornes électriques du premier module 100 (celui logé dans la boîte électrique 10). Les bornes électriques du second module 200 ne sont en revanche pas directement alimentées en courant électrique par le réseau électrique local, mais indirectement via les bornes électriques du premier module 100. On dit alors du second module 200 qu'il est « branché en parallèle » du premier module 100.

Chaque module 100, 200 comporte à cet effet des jeux de contacts électriques qui sont, d'une part, connectés électriquement aux bornes électriques précitées, et qui sont, d'autre part, adaptés à être connectés ensemble via une barrette de connexion 300.

Les contacts électriques de chaque jeu sont accessibles au travers du socle 110, 210, via des jeux d'ouvertures d'introduction 115A, 115B, 115C, 115D, 215A, 215B, 215C, 215D (ci-après désignés 115A-115D, 215A-215D afin d'alléger l'énoncé de cet exposé).

La barrette de connexion 300 comporte quant à elle des broches adaptées à s'engager au travers des ouvertures d'introduction 115A-115D, 215A-215D d'un jeu de chaque module 100, 200, afin de connecter ensemble les contacts électriques correspondant des deux modules 100, 200.

Comme le montre bien la figure 2, chaque jeu d'ouvertures d'introduction 115A-115D, 215A-215D comporte plusieurs ouvertures qui sont réparties autour d'un axe radial qui passe par l'axe central A1, A2 et qui est dirigé selon une direction moyenne D1A-D1D, D2A-D2D.

Selon une caractéristique particulièrement avantageuse de l'invention, il est prévu au moins deux jeux d'ouvertures d'introduction 115A, 115D, 215A, 215D sur chaque module 100, 200 qui sont situés de telle manière l'un par rapport à l'autre que leurs deux directions moyennes D1A, D1D, D2A, D2D sont orthogonales.

De cette manière, les deux modules 100, 200 peuvent être placés :
- soit en position juxtaposée à côté l'un de l'autre suivant une ligne horizontale (voir figure 2) de manière que les broches de la barrette de connexion 300 puissent s'engager au travers des ouvertures d'introduction 115D, 215D des deux modules 100, 200,
- soit en position juxtaposée l'un au-dessus de l'autre suivant une ligne verticale (voir figure 12) de manière que les broches de la barrette de connexion 300 puissent s'engager au travers des ouvertures d'introduction 115A, 215C des deux modules 100, 200.

De manière préférentielle, comme le montre la figure 2, chaque module comporte quatre jeux de contacts électriques accessibles depuis quatre jeux d'ouvertures d'introduction 115A-115D, 215A-215D. Ces jeux d'ouvertures d'introduction sont situés de manière diamétralement opposée deux à deux, sur deux diamètres orthogonaux de la paroi frontale 111, 211 du socle 110, 210 de chaque module 100, 200.

Autrement formulé, les quatre jeux d'ouvertures d'introduction 115A-115D, 215A-215D sont régulièrement répartis autour de l'axe central A1, A2 du socle 110, 210, dans quatre quadrants ouverts à 90 degrés. Pour la clarté de la figure 2, seul un seul cadran Q1 a ici été représenté.

De cette manière, il est possible de placer les deux modules 100, 200 l'un au-dessus de l'autre (le premier module au-dessus ou en dessous du second) ou l'un à côté de l'autre (le premier module à gauche ou à droite du second), puis de les brancher en parallèle l'un de l'autre au moyen de la barrette de connexion 300.

Dans le mode de réalisation représenté sur les figures, les modules 100, 200 présentent tous deux des fonctions de prises de courant.

Comme le montre la figure 1, leurs enjoliveurs 150, 250 définissent alors chacun un puits de réception de fiches électriques.

Chaque module 100, 200 comporte de ce fait trois bornes électriques de terre, de phase et de neutre, qui se présentent ici sous la forme d'une broche de terre et de deux alvéoles de réception des broches d'une fiche électrique.

Chaque jeu de contacts électriques comporte trois contacts électriques respectivement connectés aux alvéoles et à la broche de terre du module 100, 200.

Chaque jeu d'ouvertures d'introduction 115A-115D, 215A-215D comporte en correspondance trois ouvertures distinctes.

Dans ce mode de réalisation, comme le montre bien la figure 1, la paroi latérale 112, 212 de chaque module 100, 200 est cylindrique de révolution autour de l'axe central A1, A2. La paroi frontale 111, 211 de chaque module 100, 200, qui vient de formation avec la paroi latérale 112, 212, est plane et présente une forme annulaire autour de cet axe central A1, A2. De cette manière, la paroi frontale 111, 211 délimite en son centre une ouverture d'accueil dans laquelle est fixé l'enjoliveur 150, 250.

La paroi latérale 112, 212 de chaque socle 111, 211 est fermée à l'arrière par un fond 113, 213, qui est encliqueté sur la paroi latérale.

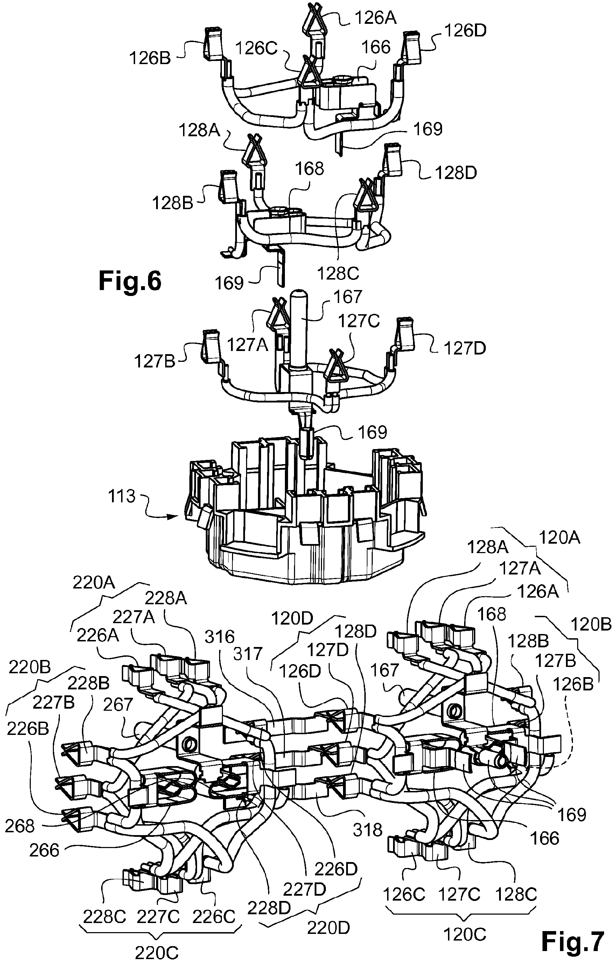

Le fond 113 du premier module 100, qui présente une forme très proche de celui du second module 200, est représenté en détail sur la figure 6. On y observe qu'il est prévu pour recevoir par l'avant les bornes électriques 166, 167, 168 et les contacts électriques 126A-126D, 127A-127D, 128A-128D du premier module 100.

Les bornes électriques 166, 167, 168 et les contacts électriques 226A-226D, 227A-227D, 228A-228D du second module 200 étant quasi-identiques à ceux du premier module 100, ils ne seront pas ici décrits en détail.

Comme le montre la figure 6, une première des bornes électriques du premier module 100 forme une broche de terre 167, conçue pour émerger à l'intérieur du puits de réception délimité par l'enjoliveur 150.

Les deux autres bornes électriques forment quant à elles des alvéoles 166, 168 situées à l'arrière d'ouvertures prévues dans le fond du puits de réception délimité par l'enjoliveur 150 pour recevoir des broches d'une fiche électrique.

Ces trois bornes électriques diffèrent seulement de celles du second module en ce qu'elles portent à l'arrière des pattes 169 pour leur connexion au réseau électrique local (les bornes du second module 200 sont quant à elles dépourvues de telles pattes).

Comme le montre la figure 3, ces pattes 169 sont prévues pour émerger à l'arrière du fond 113 du socle 110. Contrairement au fond 213 du second module 200, le fond 113 présente alors trois ouvertures pour le passage de ces pattes 169.

Comme le montre la figure 6, il est prévu quatre contacts électriques 126A-126D, 127A-127D, 128A-128D connectés à chaque borne de connexion 166, 167, 168. Ces douze contacts électriques présentent tous des formes identiques de pince.

Ils sont fabriqués à partir d'un feuillard métallique découpé et plié pour délimiter deux bras en forme de pince, adaptés à recevoir les broches de la barrette de connexion 300.

Les quatre contacts électriques associés à chaque borne de connexion sont connectés à celle-ci au moyen de quatre fils électriques isolés, dont les extrémités dénudées sont soudées ou serties à la borne de connexion ou aux contacts électriques.

La figure 7 illustre la manière selon laquelle les contacts électriques 126A-126D, 127A-127D, 128A-128D, 226A-226D, 227A-227D, 228A-228D de chaque module 100, 200 sont positionnés les uns par rapport aux autres lorsque chaque module 100, 200 est assemblé.

On y observe que les contacts électriques sont répartis par triplets. Chaque triplet, qui forme alors un jeu de contacts électriques 120A, 120B, 120C, 120D, 220A, 220B, 220C, 220D, comporte un contact connecté électriquement à l'une des alvéoles 166, 266, un autre contact connecté électriquement à l'autre des alvéoles 168, 268, et un dernier contact (celui situé au centre) connecté électriquement à la broche de terre 167, 267.

Les trois contacts électriques de chaque jeu sont respectivement situés à l'arrière des ouvertures d'introduction 115A-115D, 215A-215D de chaque jeu et sont isolés électriquement les uns des autres.

Sur les figures 4 et 5, on a représenté la barrette de connexion 300 qui permet de connecter les contacts électriques de l'un quelconque des jeux du premier module 100 avec les contacts électriques de l'un quelconque des jeux du second module 200.

Cette barrette de connexion 300 comporte un socle 310 en matière isolante, de forme globale parallélépipédique.

Ce socle 310 est réalisé en deux parties encliquetées l'une sur l'autre, dont un support arrière 311 et un capot avant 312.

Le support arrière 311 présente un fond sensiblement plat et carré, bordé à l'avant par un rebord.

Le capot avant 312 présente quant à lui une forme de plaque carrée. Il porte en saillie sur sa face arrière, le long de deux bords opposés, deux dents d'encliquetage 313 adaptées à s'accrocher dans des fenêtres 314 prévues en correspondance sur le support arrière 311.

Comme le montre la figure 5, le support arrière 311 présente trois renfoncements en creux dans la face avant de son fond, qui délimitent trois logements 315 allongés adaptés à recevoir trois conducteurs électriques 316, 317, 318 de manière à les isoler électriquement les uns des autres.

Chaque logement 315 présente une partie centrale surélevée par rapport à ses parties d'extrémité. Chaque partie d'extrémité de chaque logement 315 présente quant à elle une fente pour le passage vers l'extérieur du conducteur électrique 316, 317, 318 correspondant.

Chaque conducteur électrique 316, 317, 318 est issu de formation à partir d'un feuillard métallique découpé et plié de manière à se présenter en trois parties, dont :
- une partie interne 326, 327, 328 allongée qui est entièrement logée dans le logement 315 correspondant du socle 310, et
- deux parties d'extrémité 336, 337, 338 qui sont repliées à angle droit par rapport à ladite partie interne 326, 327, 328 et qui passent au travers des fentes prévues aux extrémités des logements 315 du socle 310.

Ainsi, comme le montre la figure 4, les parties d'extrémité 336, 337, 338 des conducteurs électriques 316, 317, 318 émergent toutes sur la face arrière du socle 310, suivant une même direction. Elles forment ainsi les «broches» précitées, dont on rappelle qu'elles sont adaptées à traverser les ouvertures d'introduction 115A-115D, 215A-215D des modules 100, 200 afin de venir s'engager dans les pinces formées par les contacts électriques des modules 100, 200.

On observe sur la figure 5 que la partie interne 326, 327, 328 de chaque conducteur électrique 316, 317, 318 est incurvée de manière à s'adapter à la forme du fond du logement 315 qui l'accueille, ce qui optimise le blocage du conducteur électrique 316, 317, 318 dans son logement 315.

On pourrait prévoir que la barrette de connexion 300 soit dépourvue de moyens de fixation aux modules 100, 200, en estimant que les forces exercées par les contacts électriques des modules 100, 200 sur les broches de la barrette de connexion 300 suffisent à maintenir cette dernière en position fixe sur les modules 100, 200.

Toutefois, ici, comme le montre la figure 4, le support arrière 311 du socle 310 de la barrette de connexion 300 comporte des moyens de fixation aux socles 110, 210 des modules 100, 200. Plus précisément, il porte, en saillie sur sa face arrière, quatre pattes d'encliquetage 319 adaptées à venir s'encliqueter par paires dans des trous (non visibles sur les figures) prévus en correspondance dans la paroi frontale 111, 211 des socles 110, 210 des modules 100, 200.

Il est alors prévu deux trous de part et d'autre de chaque jeu d'ouvertures de passage 115A-115D, 215A-215D, de manière à pouvoir encliqueter le socle 310 de la barrette de connexion 300 sur les socles 110, 210 des deux modules 100, 200, quelle que soit la position relative des deux modules l'un par rapport à l'autre.

Comme le montre la figure 1, le second module 200, dont on rappelle qu'il est prévu pour être directement engagé au travers de l'ouverture circulaire 3 pratiquée dans la cloison creuse 1, présente une forme différente de celle du premier module 100.

Ainsi, son fond 213 est fermé à l'arrière, alors que celui du premier module 100 est partiellement ouvert pour permettre aux pattes 169 d'émerger vers l'extérieur (voir figure 3).

Par ailleurs, les moyens de fixation 230 équipant le socle 210 du second module 200 sont différents de ceux équipant le socle 110 du premier module 100.

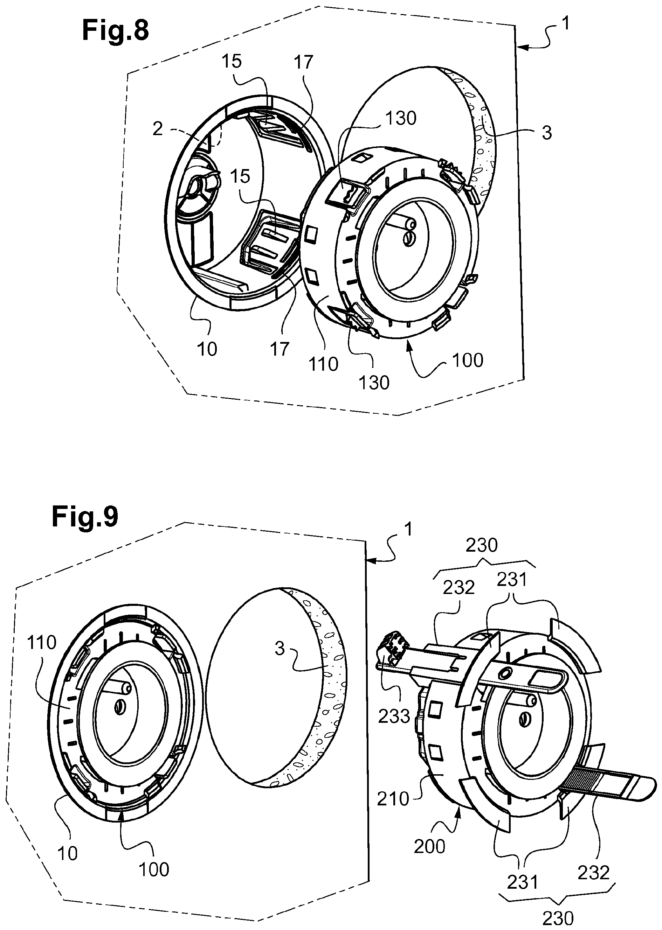

En l'espèce, comme le montre la figure 9, ces moyens de fixation 230 comportent un épaulement 231 adapté à s'appuyer contre la face avant de la cloison creuse 1 et des moyens d'accrochage rétractables 232 adaptés à s'accrocher à la face arrière du panneau de plâtre de la cloison creuse 1.

Cet épaulement 231 est ici formé par un trottoir périphérique qui longe partiellement le bord de la paroi frontale 211 du socle 210 du second module 200. Ce trottoir périphérique est plus précisément ici formé de quatre portions angulaires régulièrement réparties autour de l'axe central A2.

Cet épaulement 231 est circonscrit dans un cercle de diamètre supérieur à celui de l'ouverture circulaire 3 pratiquée dans la cloison creuse 1, de manière qu'il peut s'appuyer solidement sur celle-ci.

Les moyens d'accrochage rétractables 232 qui, en combinaison avec l'épaulement 231, sont prévus pour venir pincer le panneau de plâtre de la cloison creuse 1, sont ici formés par deux languettes souples situées de manière diamétralement opposée sur chaque côté du socle 210.

Ces languettes souples sont planes et allongées. Elles portent à leurs extrémités arrières des crochets 233 adaptés à venir s'appuyer contre la face arrière du panneau de plâtre de la cloison creuse 1.

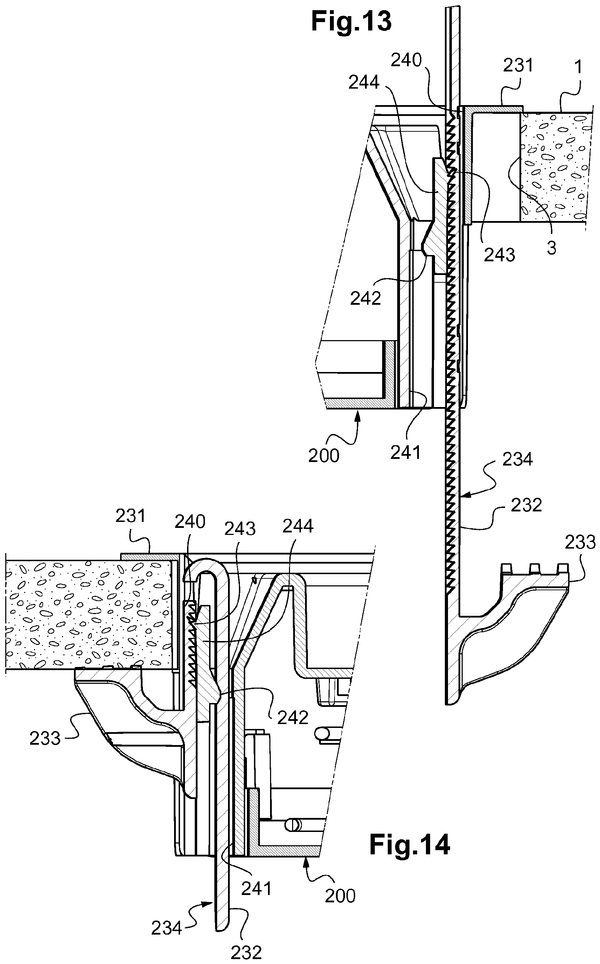

Comme le montrent les figures 13 et 14, ces languettes souples 234 sont montées coulissantes dans des premiers passages 240 délimités par le socle 210 du module 200.

Leur souplesse permet tout d'abord aux crochets 233 de s'escamoter à l'arrière du socle 210, lorsque le module 200 est engagé au travers de l'ouverture circulaire 3 de la cloison creuse 1.

Leur souplesse leur permet par ailleurs, lorsqu'un installateur les tire vers l'avant, de coulisser dans leurs premiers passage 240 jusqu'à ce que leurs crochets 233 s'appuient contre la face arrière du panneau de plâtre.

Enfin, leur souplesse permet de replier leurs extrémités avant vers l'intérieur et vers l'arrière, de manière à les enfiler dans des seconds passages 241 délimités par le socle dans le voisinage des premiers passages 240.

Ces seconds passages 241 sont isolés des premiers passages 240 par une simple cloison 244.

Cette simple cloison 244 porte, du côté du premier passage 240, une dent 243 en saillie, et, du côté du second passage 241, un renflement 242 en saillie.

De cette manière, comme le montre bien la figure 14, lorsque les languettes souples 234 sont tirées vers l'avant puis repliées et engagées dans les seconds passages 241 :
- leurs crans viennent coopérer avec les dents 243, ce qui permet alors de bloquer les languettes souples 234 et de fixer rigidement le second module 200 dans la cloison creuse 1, et
- les languettes souples 234 se retrouvent bloquées dans les seconds passages 241 par les renflements 242, ce qui les empêche de ressortir de ces seconds passages 241.

Bien entendu, en variante, on aurait pu prévoir des moyens de fixation différents pour bloquer le socle 210 dans la cloison creuse 1. A titre d'exemple, on aurait pu utiliser des griffes qui interviendraient en position diamétralement opposée sur le socle et qui, sous le contrôle de vis, seraient aptes à basculer et/ou coulisser par rapport au socle afin de venir s'accrocher à la cloison creuse.

Les moyens de fixation 130 du socle 110 du premier module 100 sont différents de ceux du second socle 210 du second module 200.

On rappelle qu'ils sont en effet prévus pour s'accrocher à la boîte électrique 10 (voir figure 1).

Préférentiellement, ces moyens de fixation 130 permettent de régler la position angulaire du socle 110 dans la boîte électrique 10. De cette manière, en pratiquant une ouverture 3 dans la cloison creuse 1 de diamètre supérieur à celui de la paroi latérale 212 du socle 210 du second module 200, il sera possible de régler l'horizontalité de l'ensemble formé des deux modules 100, 200 et de la barrette de connexion 300.

Avant de décrire en détail ces moyens de fixation 130, on pourra décrire brièvement la forme de la boîte électrique 10 représentée sur la figure 1.

Sur la figure 1, on observe que la boîte électrique 10 est constituée d'un corps 11 réalisé dans un matériau plastique rigide (typiquement en polypropylène) et d'un revêtement 12 réalisé dans un matériau plus souple (typiquement en SEBS - acronyme anglais de «polystyrène-b-poly(éthylène-butylène)-b-polystyrène »).

Le corps 11 comporte une paroi latérale 13 de forme cylindrique de révolution autour de l'axe central A1.

Pour sa fixation dans l'ouverture circulaire 2 pratiquée dans le panneau de plâtre, le corps 11 de la boîte électrique 10 comporte un trottoir extérieur 14 qui longe extérieurement le bord de l'extrémité avant de sa paroi latérale 13 et qui est adapté à prendre appui contre la face avant du panneau de plâtre, tout autour de l'ouverture circulaire qui y est pratiquée. Ainsi, ce trottoir extérieur 14 permet de bloquer la boîte électrique 10 vers l'arrière.

Pour son blocage vers l'avant, la boîte électrique pourrait être équipée de deux griffes qui interviendraient en position diamétralement opposée et qui, sous le contrôle de vis, seraient aptes à venir s'accrocher à la face arrière du panneau de plâtre.

Ici, comme le montre la figure 1, la paroi latérale 13 du corps 11 de la boîte électrique 10 comporte plutôt quatre volets 15 globalement rectangulaires qui sont découpés dans des ouvertures pratiquées dans la paroi latérale 13 et qui sont régulièrement répartis autour de l'axe central A1. Chaque volet 15 présente trois bords libres et un quatrième bord, à savoir ici le bord avant, qui se raccorde au reste de la paroi latérale 13 par deux pattes formant charnière. Les volets 15 sont ainsi libres de pivoter entre une position rentrée et une position sortie.

Le revêtement 12 souple recouvre la face extérieure de chacun de ces quatre volets 15.

Au repos, les volets 15 sont en position rentrée, c'est-à-dire que leurs faces externes sont situées dans le prolongement de la face externe du reste de la paroi latérale 13 du corps 11 de la boîte électrique 10. Ces volets ne gênent donc pas l'engagement de la boîte électrique 10 au travers de l'ouverture circulaire 2 pratiquée dans le panneau de plâtre.

Ces quatre volets 15 comportent chacun, en saillie sur leurs faces intérieures, deux nervures parallèles 16 qui forment des rampes. Ainsi, lorsque le module 100 est rapporté dans la boîte électrique 10, son socle 110 appuie contre ces nervures parallèles 16, ce qui permet de forcer les volets 15 à se déployer en position sortie, c'est-à-dire en saillie de la face externe de la paroi latérale 13 du corps 11 de la boîte électrique 10. Dans cette position, les volets 15 s'accrochent alors à la face arrière du panneau de plâtre, ce qui bloque la boîte électrique 10 dans la cloison creuse 1.

Sur la figure 1, on observe que la boîte électrique 10 présente quatre fenêtres 17 identiques, régulièrement réparties autour de l'axe A1.

Ces fenêtres 17 présentent chacune une forme rectangulaire et elles s'étendent en longueur le long du bord avant de la paroi latérale 13 du corps 11 de la boîte électrique 10. Elles sont traversantes, en ce sens qu'elles débouchent de part et d'autre du corps 11 de la boîte électrique 10. Le revêtement 12 souple ferme toutefois les fonds de ces quatre fenêtres 17.

Les moyens de fixation 130 prévus sur le premier module 100 sont alors prévus pour se fixer à ces fenêtres 17.

En l'espèce, ces moyens de fixation 130 sont des moyens d'encliquetage.

Ils comportent quatre pattes 131 globalement rectangulaires, régulièrement réparties autour de l'axe central A1. Ces quatre pattes 131 sont découpées dans la paroi latérale 112 du socle 110 du premier module 100. Elles présentent trois bords libres et un quatrième bord, à savoir ici le bord arrière, qui se raccorde au reste de la paroi latérale 112 du socle 110 pour former une charnière. Au repos, chaque patte 131 s'étend dans le prolongement de la paroi latérale 112.

Chaque patte 131 est alors flexible depuis sa position de repos vers une position déformée vers l'intérieur du socle 110.

Chaque patte 131 porte, du côté de son extrémité libre avant, des dents d'accrochage 132 adaptées à s'accrocher aux bords avant des fenêtres 17 de la boîte électrique 10.

Ces dents d'accrochage 132 s'étendent sur un secteur angulaire autour de l'axe central A1 qui est inférieur à celui des fenêtres 17 de la boîte électrique 10. De cette manière, il est possible d'ajuster la position angulaire du socle 110 par rapport à la boîte électrique 1.

Ces dents d'accrochage 132 présentent par ailleurs des pointes en saillie vers l'extérieur, qui peuvent s'accrocher au revêtement 12 flexible fermant le fond des fenêtres 17 de la boîte électrique 10. De cette manière, il est possible de bloquer la position angulaire du socle 110 par rapport à la boîte électrique 1.

Sur la figure 1, on a représenté également un étrier 20 qui est prévu pour être placé à l'arrière de la boîte électrique 10 en vue de faciliter la connexion de fils électriques issu du réseau électrique local au module 100.

Cet étrier 20, qui ne fait pas en propre l'objet de la présente invention, ne sera pas ici décrit en détail. On indiquera seulement qu'il comporte une embase circulaire 21 à partir duquel s'élèvent deux bras 22 dont les extrémités libres sont recourbées pour s'accrocher à la face avant du panneau de plâtre. Les deux bras 22 permettent de positionner l'étrier 20 sur le panneau de plâtre, avant d'y rapporter la boîte électrique 10.

L'embase circulaire 21 loge des éléments de connexion (non visibles sur les figures), qui comprennent chacun une borne d'entrée pour la connexion de l'un des fils électriques et une borne de sortie dans laquelle peut venir se brancher l'une des pattes 169 faisant saillie à l'arrière du socle 110 du premier module 100 (voir figure 4). Pour cela, le fond de la boîte électrique 10 présente une ouverture de passage de ces pattes 169.

Cet étrier 20 comporte une ouverture d'entrée dans laquelle est fixé un embout 30 adapté à être connecté à trois gaines de cheminement de fils électriques (de type ICTA). C'est donc par cette ouverture d'entrée que les fils électriques peuvent entrer dans l'étrier 20 pour se brancher aux bornes d'entrée.

Enfin, sur la figure 1, on a représenté une plaque d'habillage 400 adaptée à recouvrir simultanément les deux modules 100, 200 (autour des enjoliveurs 150, 250) et la barrette de connexion 300, à des fins esthétiques et de protection électrique.

Cette plaque d'habillage 400 présente ici une forme oblongue et est percée de deux ouvertures 440 dont les bords sont prévus pour venir s'appliquer contre les bords des deux enjoliveurs 150, 250. Ces deux ouvertures 440 sont séparées l'une de l'autre par une partie 430 qui vient recouvrir la barrette de connexion 300.

La plaque d'habillage 400 comporte des moyens d'encliquetage 450 adaptés à s'accrocher à chacun des deux modules 100, 200. Il s'agit ici de dents d'encliquetage adaptées à venir s'accrocher aux parois frontales 111, 211.

En référence aux figures 8 à 11, on peut exposer en détail la mise en place de l'ensemble d'appareillages dans la cloison creuse 1 et sa connexion au réseau électrique local.

Initialement, les deux ouvertures circulaires 2, 3 sont découpées à la scie cloche dans le panneau de plâtre de la cloison creuse 1, l'une à côté de l'autre ou l'une au-dessus de l'autre.

L'extrémité libre d'une gaine de cheminement est alors tirée au travers de l'une des ouvertures circulaires 2. Les extrémités des fils électriques sortant de cette gaine de cheminement sont alors engagées au travers de l'embout 30 et au travers de l'ouverture d'entrée prévue dans l'étrier 20, pour être connectées aux bornes d'entrée des éléments de connexion logés dans l'étrier. L'extrémité de la gaine de cheminement est ensuite bloquée dans l'embout 30.

L'étrier 20 est ensuite mis en place au travers de l'ouverture circulaire 2 pratiqué dans le panneau de plâtre. La boîte électrique est à son tour mise en place au travers de l'ouverture circulaire 2, de manière à être parée à accueillir le module 100.

Comme le montre la figure 8, le module 100 est alors simplement engagé dans la boîte électrique 10 de telle manière que, d'une part, son socle 110 repousse les volets 15 de la boîte électrique 10 vers l'extérieur (ce qui fixe la boîte électrique 10 à la cloison creuse 1), et que, d'autre part, ses moyens de fixation 130 se clipsent dans les fenêtres 17 de la boîte électrique 10.

Comme le montre la figure 9, le second module 200 est ensuite rapporté dans la seconde ouverture circulaire 3 pratiquée dans le panneau de plâtre de la cloison creuse 1. Une fois mis en place de telle manière que son épaulement 231 s'appuie contre le panneau de plâtre, ses languettes flexibles 232 sont tirées de manière qu'elles coulissent dans les premiers passages 240 du socle 210, vers l'avant, jusqu'à ce que ses crochets 233 viennent s'appuyer contre la face arrière du panneau de plâtre.

Les languettes flexibles 232 sont ensuite repliées et enfilées dans les seconds passages 241 du socle 210. Les dents 243 et renflements 242 permettant de les bloquer en position.

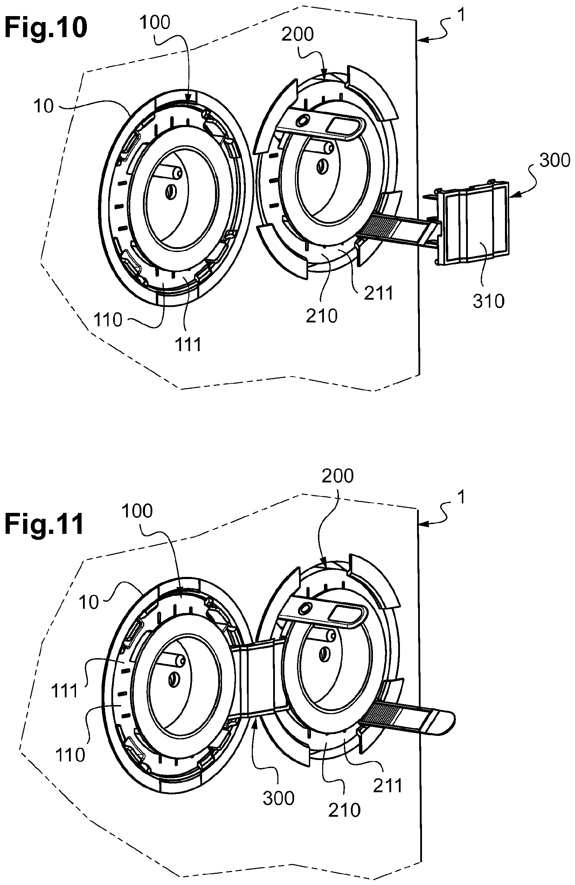

Puis, comme le montrent les figures 10 et 11, la barrette de connexion 300 est rapportée sur les deux modules 100, 200 de telle manière que ses broches se connectent aux contacts correspondant des deux modules, ce qui permet de brancher le second module 200 en parallèle du premier module 100.

Enfin, la plaque d'habillage 400 est encliquetée sur les deux modules 100, 200.

La présente invention n'est nullement limitée au mode de réalisation décrit et représenté.

On pourra notamment prévoir que la plaque d'habillage et la barrette de connexion forment une seule et même pièce.

On pourrait aussi prévoir de connecter plusieurs modules du type du second module en parallèle du premier module.

On pourrait par ailleurs prévoir que les modules aient des fonctions différentes de celle représentée sur les figures, par exemple des fonctions d'interrupteurs commandés par radio, de prises USB, ...

On pourrait aussi prévoir que les deux modules reliés aient des fonctions différentes l'une de l'autre. A titre d'exemple, l'un des modules pourrait présenter une fonction d'interrupteur lorsque l'autre présenterait une fonction de prise de courant. En variante, l'un des modules pourrait présenter une fonction de prise USB lorsque l'autre présenterait une fonction de prise de courant.

## Revendications

1. Ensemble d'appareillages électriques à rapporter dans une paroi (1), comportant :
- deux modules (100, 200) distincts qui comprennent chacun :
• un socle (110, 210) fermé à l'avant par une paroi frontale (111, 211), et
• au moins deux jeux de contacts électriques (120A, 120D, 220A, 220D) respectivement accessibles au travers du socle (110, 210) via deux jeux d'ouvertures d'introduction (115A, 115D, 215A, 215D) qui sont chacun répartis de part et d'autre d'une direction moyenne (D1A, D1D, D2A, D2D) parallèle à ladite paroi frontale (111, 211),
un premier des socles (110) étant équipé de moyens de fixation (130) dans une boîte électrique (10), et
un second des socles (210) étant équipé de moyens de fixation (230) dans une cavité (3) pratiquée dans la paroi (1),
- une barrette de connexion (300) comportant des conducteurs électriques (316, 317, 318) adaptés à connecter les contacts électriques d'un jeu de contacts électriques (120A, 120D) de l'un des modules (100) avec les contacts électriques d'un jeu de contacts électriques (220A, 220D) de l'autre module (200),
**caractérisé en ce que** lesdites deux directions moyennes (D1A, D1D, D2A, D2D) sont orthogonales et
**en ce que** les moyens de fixation (230) du second socle (210) comportent un épaulement (231) adapté à s'appuyer contre la face avant de la paroi (1) et des moyens d'accrochage rétractables (232) adaptés à s'accrocher à la face arrière de la paroi (1).

2. Ensemble selon la revendication précédente, dans lequel les ouvertures d'introduction (115A, 115D, 215A, 215D) sont toutes situées dans la paroi frontale (111, 211) du socle (110, 210).

3. Ensemble selon l'une des revendications précédentes, dans lequel chaque module (100, 200) comporte au moins un troisième jeu de contacts électriques (120C, 220C) accessibles au travers du socle (110, 210) via un troisième jeu d'ouvertures d'introduction (115C, 215C) qui sont réparties de part et d'autre d'une troisième direction moyenne (D1C, D2C) confondue avec l'une desdites deux directions moyennes (D1A, D2A).

4. Ensemble selon la revendication précédente, dans lequel, chaque socle (110, 210) présentant un axe central (A1, A2), chaque module (100, 200) comporte exactement quatre jeux de contacts électriques (120A, 120B, 120C, 120D, 220A, 220B, 220C, 220D) accessibles au travers du socle (110, 210) via quatre jeux d'ouvertures d'introduction (115A, 115B, 115C, 115D, 215A, 215B, 215C, 215D) réparties dans quatre quadrants (Q1) autour dudit axe central (A1, A2).

5. Ensemble selon l'une des revendications précédentes, dans lequel ladite barrette de connexion (300) comporte un socle (310) en matière isolante, qui loge lesdits conducteurs électriques (316, 317, 318) de telle sorte que lesdits conducteurs électriques (316, 317, 318) émergent sur une même face dudit socle (310), suivant une même direction.

6. Ensemble selon la revendication précédente, dans lequel chaque conducteur électrique (316, 317, 318) comporte une partie interne (326, 327, 328) qui est entièrement logée dans le socle (310) et qui est allongée selon un axe longitudinal, et deux parties d'extrémité (336, 337, 338) repliées à angle droit par rapport à ladite partie interne (326, 327, 328).

7. Ensemble selon l'une des revendications précédentes, dans lequel les moyens de fixation (130) du premier socle (110) comportent des moyens de réglage de la position angulaire du premier socle (110) dans la boîte électrique (10).

8. Ensemble selon l'une des revendications précédentes, dans lequel chaque jeu de contacts électriques (120A, 120B, 220A, 220B) comporte trois contacts électriques (126A, 126B, 126C, 126D, 127A, 127B, 127C, 127D, 128A, 128B, 128C, 128D, 226A, 226B, 226C, 226D, 227A, 227B, 227C, 227D, 228A, 228B, 228C, 228D) isolés électriquement les uns des autres.

9. Ensemble selon l'une des revendications précédentes, dans lequel chaque contact électrique de l'un des jeux de contacts électriques (120A, 120B, 220A, 220B) d'un module (100, 200) est connecté électriquement à l'un des contacts électriques de chaque autre jeu de contacts électriques (120A, 120B, 220A, 220B) de ce module (100, 200).

10. Ensemble selon l'une des revendications précédentes, dans lequel il est prévu une plaque d'habillage (400) adaptée à recouvrir simultanément les ouvertures d'introduction (115A, 115B, 215A, 215B) des socles (110, 210) des deux modules (100, 200) et la barrette de connexion (300).

11. Ensemble selon la revendication précédente, dans lequel la plaque d'habillage (400) comporte des moyens d'encliquetage (450) adaptés à s'accrocher à chacun des deux modules (100, 200).

12. Ensemble selon l'une des revendications précédentes, dans lequel l'un au moins des deux modules (100, 200) présente une fonction de prise de courant.

## Patentansprüche

1. In eine Wand (1) einzusetzender Bausatz für Elektrogeräte mit
- zwei getrennten Modulen (100, 200), von denen jedes
• einen durch eine Frontplatte (111, 211) vorne geschlossenen Sockel (110, 210) und
• wenigstens zwei Sätze elektrische Kontakte (120A, 120D, 220A, 220D), die jeweils durch den Sockel (110, 210) hindurch über zwei Sätze Einführungsöffnungen (115A, 115D, 215A, 215D), die beiderseits einer zur Frontplatte (111, 211) parallelen mittleren Richtung (D1A, D1D, D2A, D2D) angeordnet sind, zugänglich sind,
aufweist,
wobei ein erster (110) der Sockel mit Mitteln (130) zum Befestigen in einer elektrischen Dose (10) ausgestattet ist und
ein zweiter (210) der Sockel mit Mitteln (230) zum Befestigen in einer in die Wand (1) eingearbeiteten Vertiefung (3) ausgestattet ist,
- einer Anschlußleiste (300), die elektrische Leiter (316, 317, 318) aufweist, die dazu ausgelegt sind, die elektrischen Kontakte eines Satzes elektrischer Kontakte (120A, 120D) des einen (100) der Module mit den elektrischen Kontakten eines Satzes elektrischer Kontakte (220A, 220D) des anderen Moduls (200) zu verbinden,
**dadurch gekennzeichnet, daß** beiden mittleren Richtungen (D1A, D1D, D2A, D2D) zueinander rechtwinklig sind und
daß die Befestigungsmittel (230) des zweiten Sockels (210) eine Schulter (231), die dazu ausgelegt ist, an der Vorderseite der Wand (1) anzuliegen, und einziehbare Einhakmittel (232), die dazu ausgelegt sind, an der Rückseite der Wand (1) einzuhaken, aufweisen.

2. Bausatz gemäß dem vorangehenden Anspruch, bei dem die Einführungsöffnungen (115A, 115D, 215A, 215D) alle in der Frontplatte (111, 211) des Sockels (110, 210) gelegen sind.

3. Bausatz gemäß einem der vorangehenden Ansprüche, bei dem jedes Modul (100, 200) wenigstens einen dritten Satz durch den Sockel (110, 210) hindurch über einen dritten Satz Einführungsöffnungen (115C, 215C), die beiderseits einer mit einer der beiden mittleren Richtungen (D1A, D2A) zusammenfallenden dritten mittleren Richtung (D1C, D2C) angeordnet sind, zugängliche elektrische Kontakte (120C, 220C) aufweist.

4. Bausatz gemäß dem vorangehenden Anspruch, bei dem jeder Sockel (110, 210) eine zentrale Achse (A1, A2) aufweist und jedes Modul (100, 200) genau vier Sätze elektrische Kontakte (120A, 120B, 120C, 120D, 220A, 220B, 220C, 220D) aufweist, die durch den Sockel (110, 210) hindurch über vier Sätze Einführungsöffnungen (115A, 115B, 115C, 115D, 215A, 215B, 215C, 215D), die auf vier Quadranten (Q1) um die zentrale Achse (A1, A2) herum verteilt sind, zugänglich sind.

5. Bausatz gemäß einem der vorangehenden Ansprüche, bei dem die Anschlußleiste (300) einen Sockel (310) aus isolierendem Material aufweist, an dem die elektrischen Leiter (316, 317, 318) derart untergebracht sind, daß die elektrischen Leiter (316, 317, 318) auf einer selben Seite des Sockels (310) in einer selben Richtung austreten.

6. Bausatz gemäß dem vorangehenden Anspruch, bei dem jeder elektrische Leiter (316, 317, 318) einen inneren Teil (326, 327, 328), der vollständig im Sockel (310) untergebracht ist und der sich entlang einer Längsachse erstreckt, und zwei gegenüber dem inneren Teil (326, 327, 328) rechtwinklig abgebogene Endteile (336, 337, 338) aufweist.

7. Bausatz gemäß einem der vorangehenden Ansprüche, bei dem die Befestigungsmittel (130) des ersten Sockels (110) Mittel zum Einstellen der Winkelposition des ersten Sockels (110) in der elektrischen Dose (10) ausweisen.

8. Bausatz gemäß einem der vorangehenden Ansprüche, bei dem jeder Satz elektrische Kontakte (120A, 120B, 220A, 220B) drei untereinander elektrisch isolierte elektrische Kontakte (126A, 126B, 126C, 126D, 127A, 127B, 127C, 127D, 128A, 128B, 128C, 128D, 226A, 226B, 226C, 226D, 227A, 227B, 227C, 227D, 228A, 228B, 228C, 228D) aufweist.

9. Bausatz gemäß einem der vorangehenden Ansprüche, bei dem jeder elektrische Kontakt des einen der Sätze elektrischer Kontakte (120A, 120B, 220A, 220B) eines Moduls (100, 200) mit einem der elektrischen Kontakte jedes der anderen Sätze elektrischer Kontakte (120A, 120B, 220A, 220B) dieses Moduls (100, 200) elektrisch verbunden ist.

10. Bausatz gemäß einem der vorangehenden Ansprüche, bei dem eine Abdeckplatte (400) vorgesehen ist, die dazu ausgelegt ist, die Einführungsöffnungen (115A, 115B, 215A, 215B) der Sockel (110, 210) der beiden Module (100, 200) und die Anschlußleiste (300) gleichzeitig abzudecken.

11. Bausatz gemäß dem vorangehenden Anspruch, bei dem die Abdeckplatte (400) Einrastmittel (450) aufweist, die dazu ausgelegt sind, sich an jedem der beiden Module (100, 200) festzuhaken.

12. Bausatz gemäß einem der vorangehenden Ansprüche, bei dem wenigstens eins der beiden Module (100, 200) die Funktion einer Steckdose hat.

## Claims

1. A group of electrical accessories for fitting in a wall (1), the group comprising:
• two distinct modules (100, 200) each including:
• a base (110, 210) that is closed at the front by a front wall (111, 211); and
• at least two sets of electrical contacts (120A, 120D, 220A, 220D) accessible through the base (110, 210) via two respective sets of insertion openings (115A, 115D, 215A, 215D), each of which distributed on either side of a mean direction (D1A, D1D, D2A, D2D) parallel to said front wall (111, 211);
a first one of the bases (110) being fitted with fastener means (130) for fastening in an electrical box (10); and
a second one of the bases (210) being fitted with fastener means (230) for fastening in a cavity (3) formed in the wall (1);
• a connection bar (300) including electrical conductors (316, 317, 318) that are adapted to connect the electrical contacts of a set of electrical contacts (120A, 120D) of one of the modules (100) with the electrical contacts of a set of electrical contacts (220A, 220D) of the other module (200);
the group being **characterized in that** said two mean directions (D1A, D1D, D2A, D2D) are mutually orthogonal, and
**in that** the fastener means (230) of the second base (210) include a shoulder (231) that is adapted to bear against the front face of the wall (1), and retractable catch means (232) that are adapted to catch on the rear face of the wall (1).

2. A group according to the preceding claim, wherein all of the insertion openings (115A, 115D, 215A, 215D) are situated in the front wall (111, 211) of the base (110, 210) .

3. A group according to any preceding claim, wherein each module (100, 200) includes at least a third set of electrical contacts (120C, 220C) that are accessible through the base (110, 210) via respective third sets of insertion openings (115C, 215C) that are distributed on either side of respective third mean directions (D1C, D2C) that coincide with respective ones of said two mean directions (D1A, D2A).

4. A group according to the preceding claim, wherein each base (110, 210) presents a central axis (A1, A2), and each module (100, 200) includes exactly four sets of electrical contacts (120A, 120B, 120C, 120D, 220A, 220B, 220C, 220D) that are accessible through the base (110, 210) via four respective sets of insertion openings (115A, 115B, 115C, 115D, 215A, 215B, 215C, 215D) that are distributed in four quadrants (Q1) around said central axis (A1, A2).

5. A group according to any preceding claim, wherein said connection bar (300) includes a base (310) that is made out of insulating material and that houses said electrical conductors (316, 317, 318) in such a manner that said electrical conductors (316, 317, 318) emerge from the same face of said base (310), in the same direction.

6. A group according to the preceding claim, wherein each electrical conductor (316, 317, 318) comprises an internal portion (326, 327, 328) that is housed entirely in the base (310) and that is elongate along a longitudinal axis, and two end portions (336, 337, 338) that are bent at right angles relative to said internal portion (326, 327, 328).

7. A group according to any preceding claim, wherein the fastener means (130) of the first base (110) include adjustment means for adjusting the angular position of the first base (110) in the electrical box (10).

8. A group according to any preceding claim, wherein each set of electrical contacts (120A, 120B, 220A, 220B) comprises three electrical contacts (126A, 126B, 126C, 126D, 127A, 127B, 127C, 127D, 128A, 128B, 128C, 128D, 226A, 226B, 226C, 226D, 227A, 227B, 227C, 227D, 228A, 228B, 228C, 228D) that are electrically insulated from one another.

9. A group according to any preceding claim, wherein each electrical contact of one of the sets of electrical contacts (120A, 120B, 220A, 220B) of a module (100, 200) is electrically connected to a respective one of the electrical contacts of each other set of electrical contacts (120A, 120B, 220A, 220B) of the module (100, 200) .

10. A group according to any preceding claim, wherein a trim plate (400) is provided for simultaneously covering both of the insertion openings (115A, 115B, 215A, 215B) of the bases (110, 210) of the two modules (100, 200), and also the connection bar (300).

11. A group according to the preceding claim, wherein the trim plate (400) includes snap-fastener means (450) that are adapted to catch on each of the two modules (100, 200) .

12. A group according to any preceding claim, wherein at least one of the two modules (100, 200) presents a power-outlet function.
